# EUROPEAN PATENT APPLICATION

(11) **EP 4 202 718 A1**
(43) Date of publication of application: **28.06.2023**
(21) Application number: 21858084.3
(22) Date of filing: 15.07.2021
(51) Int. Cl.: G06F 16/182, G06F 13/10, G06F 13/14

(54) **INFORMATION PROCESSING DEVICE, INFORMATION PROCESSING METHOD, AND INFORMATION PROCESSING PROGRAM**

(30) Priority: 21.08.2020 JP 2020140421
(71) Applicant: FUJIFILM Corporation, Tokyo 106-8620 (JP)
(72) Inventor: OISHI, Yutaka, Tokyo 106-8620 (JP); KONDO,Michitaka, Tokyo 106-8620 (JP); UNO, Yuko, Tokyo 106-8620 (JP)
(74) Representative: Klunker IP Patentanwälte PartG mbB
(86) International application number: PCT/JP2021/026635
(87) International publication number: WO 2022/038935

(57) **Abstract**

An information processing apparatus includes at least one processor and distributes an object to be stored to any of a plurality of storage nodes in accordance with a distribution rule set in advance. The processor is configured to receive the object to be stored, specify a distribution rule to be applied based on a first part that is included in identification information of the received object and that is associated with the distribution rule, and distribute the received object to any of the plurality of storage nodes in accordance with the specified distribution rule.

## Description

### BACKGROUND OF THE INVENTION

### 1. Field of the Invention

The disclosed technology relates to an information processing apparatus, an information processing method, and an information processing program.

### 2. Description of the Related Art

The following technology has been known as a technology for deciding a transmission destination of an object based on a rule set in advance.

For example, JP2017-184195A discloses that in a case of setting a first rule for deciding a transmission destination of an object based on an identifier uniquely assigned to the object in a plurality of communication devices on a route of transmitting the object to any of a plurality of real storage nodes, the setting is performed based on a first assignment relationship for assigning the identifier to any of the plurality of real storage nodes and a connection relationship between the plurality of communication devices and the plurality of real storage nodes.

JP2016-537735A discloses, in a storage system including a controller, a switch, and storage devices communicating with the switch, receiving an operation request by the switch, transporting a request identification in the operation request, including at least one of user group information or storage policy information in the request identification, acquiring a flow table entry matching the operation request by issuing an inquiry to a flow table of the switch in accordance with the request identification by the switch, and transmitting the operation request to a target storage device among the storage devices in accordance with a transmission rule of the matching flow table entry by the switch.

### SUMMARY OF THE INVENTION

In update processing of an object in an object storage system, the object after update is not stored by overwriting an existing object and is stored in a storage node as a separate object from the existing object.

In addition, in the object storage system, for reliability improvement, load distribution, and the like of the system, a plurality of storage nodes are prepared, and an object transmitted from a user is distributed to any of the plurality of storage nodes based on a distribution rule set in advance.

In such a system, in a case where a storage node is newly added, an object cannot be distributed to the newly added storage node in a case where the object is distributed in accordance with a distribution rule (hereinafter, referred to as an old rule) employed before the addition of the storage node. Therefore, employing a new distribution rule (hereinafter, referred to as a new rule) that includes the newly added storage node in a distribution destination is considered. In this case, an update object that is an update of the existing object distributed in accordance with the old rule may be distributed in accordance with the new rule. Consequently, the update object may be stored in a storage node different from a storage node in which the existing object is stored. In a case where the existing object and the update object are stored in different storage nodes, it may be difficult to specify the most recent object.

While a case of changing the distribution rule with the addition of the storage node has been illustrated in the above description, an assumption that the distribution rule is changed regardless of the addition of the storage node is also made. In addition, an assumption that a plurality of distribution rules coexist and use of the distribution rules is differentiated in accordance with a situation is also made. In any of the cases, the existing object and the update object may be stored in different storage nodes because of presence of the plurality of distribution rules, and it may be difficult to specify the most recent object.

The disclosed technology is conceived in view of the above circumstances, and an object thereof is to facilitate specification of the most recent object even in a case where a plurality of distribution rules for distributing an object to any of a plurality of storage nodes are present.

An information processing apparatus according to an aspect of the disclosed technology distributes an object to be stored to any of a plurality of storage nodes in accordance with a distribution rule set in advance, the apparatus comprising at least one processor. The processor is configured to receive the object to be stored, specify a distribution rule to be applied based on a first part that is included in identification information of the received object and that is associated with the distribution rule, and distribute the received object to any of the plurality of storage nodes in accordance with the specified distribution rule.

The first part may include a numerical value, and a plurality of the distribution rules may be associated with a range determined in advance for the numerical value. In this case, the processor may be configured to specify the distribution rule to be applied from the plurality of distribution rules based on the numerical value.

The numerical value may be a numerical value that is increased with an elapse of time. The numerical value may include a numerical value corresponding to a year, a month, and a day of creation of the object to be stored.

The first part may include a character string, and a plurality of the distribution rules may be associated with a range of an order corresponding to an order rule determined in advance for the character string. In this case, the processor may be configured to specify the distribution rule to be applied from the plurality of distribution rules based on the character string.

The distribution rule may be updated with addition of the storage node. In this case, a distribution destination corresponding to a relatively old distribution rule may not include the added storage node, and a distribution destination corresponding to a relatively new distribution rule may include the added storage node.

The processor may be configured to decide a storage node as a distribution destination of the object to be stored based on the identification information of the object. The identification information of the object may further include a second part. In this case, the processor may be configured to decide the storage node as the distribution destination of the object to be stored based on the second part. The processor may be configured to decide the storage node as the distribution destination of the object to be stored based on a value of a remainder in dividing a hash value of the second part by a divisor corresponding to the distribution rule to be applied.

An information processing method according to another aspect of the disclosed technology is an information processing method for distributing an object to be stored to any of a plurality of storage nodes in accordance with a distribution rule set in advance, the method comprising causing at least one processor provided in an information processing apparatus to execute receiving the object to be stored, specifying a distribution rule to be applied based on a first part that is included in identification information of the received object and that is associated with the distribution rule, and distributing the received object to any of the plurality of storage nodes in accordance with the specified distribution rule.

An information processing program according to still another aspect of the disclosed technology is an information processing program causing at least one processor provided in an information processing apparatus to execute processing of distributing an object to be stored to any of a plurality of storage nodes in accordance with a distribution rule set in advance, the program causing the processor to execute a process comprising receiving the object to be stored, specifying a distribution rule to be applied based on a first part that is included in identification information of the received object and that is associated with the distribution rule, and distributing the received object to any of the plurality of storage nodes in accordance with the specified distribution rule.

According to the disclosed technology, specification of the most recent object can be facilitated even in a case where a plurality of distribution rules for distributing an object to any of a plurality of storage nodes are present.

### BRIEF DESCRIPTION OF THE DRAWINGS

Fig. 1 is a diagram illustrating an example of a configuration of a storage system according to an embodiment of the disclosed technology.
Fig. 2 is a diagram illustrating an example of a hardware configuration of an information processing apparatus according to the embodiment of the disclosed technology.
Fig. 3 is a diagram illustrating an example of rule information according to the embodiment of the disclosed technology.
Fig. 4 is a functional block diagram illustrating an example of a functional configuration of the information processing apparatus according to the embodiment of the disclosed technology.
Fig. 5 is a diagram illustrating an example of identification information assigned to an object according to the embodiment of the disclosed technology.
Fig. 6A is a diagram illustrating an example of an aspect of distributing the object in accordance with an old rule according to the embodiment of the disclosed technology.
Fig. 6B is a diagram illustrating an example of an aspect of distributing the object in accordance with a new rule according to the embodiment of the disclosed technology.
Fig. 7 is a flowchart illustrating an example of a flow of processing performed by executing an information processing program by a CPU according to the embodiment of the disclosed technology.
Fig. 8 is a flowchart illustrating an example of a flow of decision processing according to the embodiment of the disclosed technology.
Fig. 9 is a diagram illustrating an example of the identification information assigned to the object according to the embodiment of the disclosed technology.

### DESCRIPTION OF THE PREFERRED EMBODIMENTS

Hereinafter, an example of an embodiment of the present invention will be described with reference to the drawings. The same or equivalent constituents and parts in each drawing will be designated by the same reference numerals, and description thereof may not be repeated.

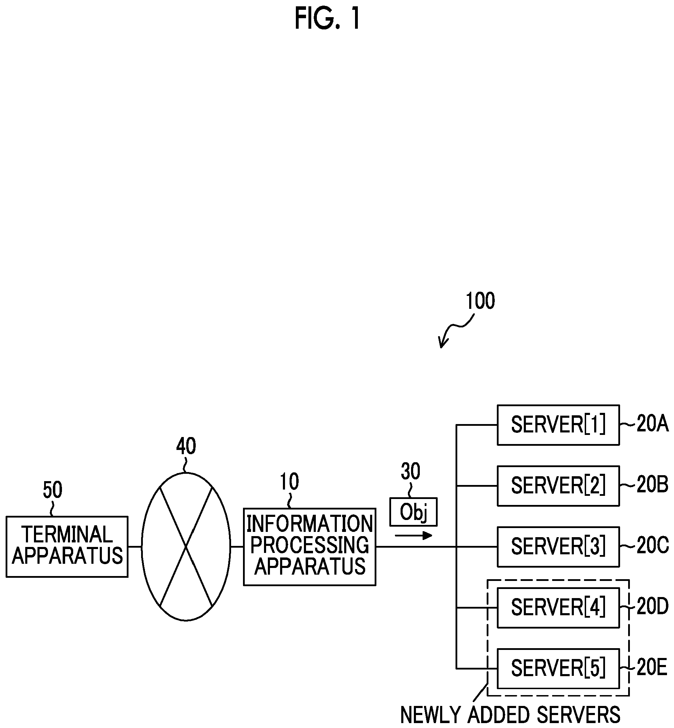

Fig. 1 is a diagram illustrating an example of a configuration of a storage system 100 according to the embodiment of the disclosed technology. The storage system 100 is configured to include an information processing apparatus 10 and a server[1] 20A to a server[5] 20E. The storage system 100 is connected to a terminal apparatus 50 via a network 40. The terminal apparatus 50 is a computer used by a user who uses the storage system 100. The storage system 100 stores an object 30 for which a storage request is made from the terminal apparatus 50 and, in a case where a readout request of the object is made from the terminal apparatus 50, reads out and transmits the requested object to the terminal apparatus 50. The object 30 is configured to include a data body and metadata related to the data body.

Each of the server[1] 20A to the server[5] 20E constitutes a storage node, and the object for which the storage request is made from the terminal apparatus 50 is stored in any of the server[1] 20A to the server[5] 20E. While five servers constituting the storage nodes are illustrated in Fig. 1, the number of servers comprised in the storage system 100 can be appropriately increased or decreased.

The information processing apparatus 10 functions as a load balancer that distributes loads of the server[1] 20A to the server[5] 20E. The information processing apparatus 10 is connected to each of the server[1] 20A to the server[5] 20E. The object 30 for which the storage request is made from the terminal apparatus 50 is supplied to the information processing apparatus 10. The information processing apparatus 10 distributes the object 30 to be stored supplied from the terminal apparatus 50 to any of the server[1] 20A to the server[5] 20E in accordance with a predetermined distribution rule. For example, the distribution rule may define an allocation ratio (distribution ratio) of the object for each of the server[1] 20A to the server[5] 20E.

In the storage system 100, in a case of updating an existing object already stored in any of the server[1] 20A to the server[5] 20E, an update object that is an update of the existing object is stored as a separate object from the existing object. That is, the update of the object in the storage system 100 is performed by "adding the update object" instead of so-called "data overwriting". The same identification information as the corresponding existing object is assigned to the update object. The identification information may be an object key that is a universally unique identifier (UUID) for uniquely identifying the object.

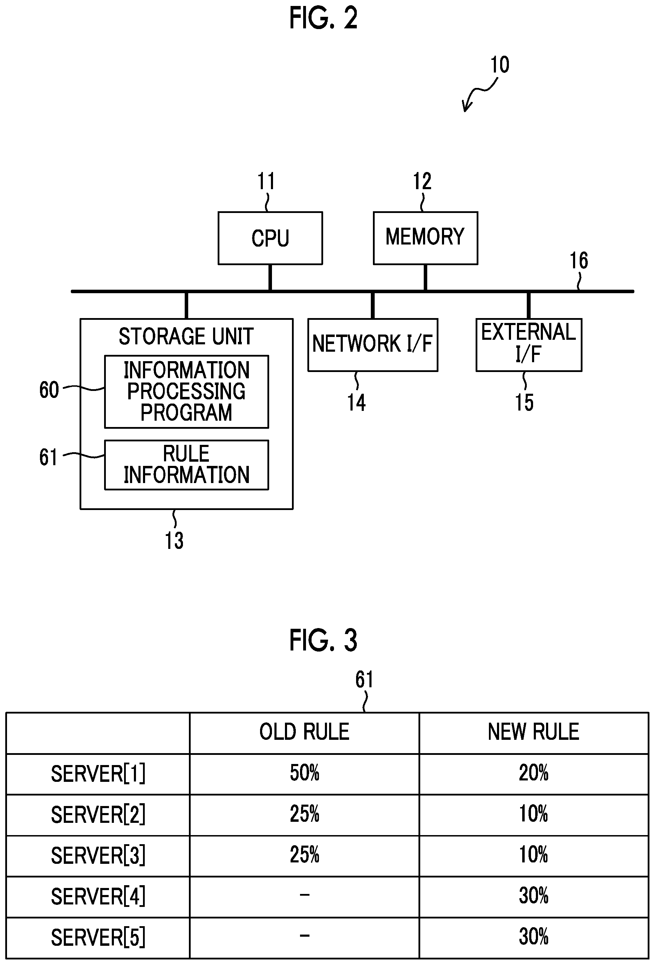

Fig. 2 is a diagram illustrating an example of a hardware configuration of the information processing apparatus 10. The information processing apparatus 10 includes a central processing unit (CPU) 11, a memory 12 as a transitory storage region, and a non-volatile storage unit 13. In addition, the information processing apparatus 10 includes a network interface 14 connected to the network 40 and an external interface 15 to which the server[1] 20A to the server[5] 20E are connected. The CPU 11, the memory 12, the storage unit 13, the network interface 14, and the external interface 15 are connected to a bus 16.

The storage unit 13 is implemented by a storage medium such as a hard disk drive (HDD), a solid state drive (SSD), or a flash memory. The storage unit 13 stores an information processing program 60 and rule information 61 described later. The CPU 11 reads out the information processing program 60 from the storage unit 13 into the memory 12 and executes the information processing program 60. The CPU 11 is an example of a processor according to the embodiment of the disclosed technology.

For example, access to the storage system 100 is performed via a management console displayed on a web browser operating on the terminal apparatus 50. In a case of storing an object in the storage system 100, the user creates a bucket on the management console and arranges the object to be stored in the bucket. The bucket is a virtual accommodation region for receiving the object to be stored. The user can create a plurality of buckets. In a case where the user arranges an object to which an object key that is identification information of the object is assigned, in the bucket and provides an upload instruction of the object on the management console, the object is transmitted to the storage system 100 and is stored in any of the server[1] 20A to the server[5] 20E.

The distribution rule in a case where the information processing apparatus 10 distributes the object to be stored to the server[1] 20A to the server[5] 20E is associated with the bucket. Content of the distribution rule is stored in the storage unit 13 of the information processing apparatus 10 as the rule information 61.

Fig. 3 is a diagram illustrating an example of the rule information 61 stored in the storage unit 13 of the information processing apparatus 10. In the following description, an assumption that the server[4] 20D and the server[5] 20E are newly added servers is made. The storage unit 13 of the information processing apparatus 10 stores a distribution rule (hereinafter, referred to as an old rule) employed at a time of creating a bucket created before the addition of the server[4] 20D and the server[5] 20E and a distribution rule (hereinafter, referred to as a new rule) employed after the addition of the server[4] 20D and the server[5] 20E as the rule information 61.

The old rule does not assume presence of the server[4] 20D and the server[5] 20E. Accordingly, a distribution destination of the object corresponding to the old rule normally does not include the added server[4] 20D and the server[5] 20E. In the example illustrated in Fig. 3, the old rule is defined as setting an allocation ratio of the object for the server[1] 20A to 50%, setting the allocation ratio of the object for the server[2] 20B to 25%, and setting the allocation ratio of the object for the server[3] 20C to 25% (allocation ratio of 2:1:1). For example, the allocation ratio of the object can be determined in accordance with processing performance of the servers. That is, a higher allocation ratio of the object may be set for a server having higher processing performance. Accordingly, the loads in which the processing performance of the servers is considered can be uniformed.

Even after the addition of the server[4] 20D and the server[5] 20E, the object cannot be distributed to the server[4] 20D and the server[5] 20E as long as the old rule is applied. Therefore, in the information processing apparatus 10 according to the present embodiment, the distribution rule employed at the time of creating the bucket can be changed. That is, in a case where a server functioning as a storage node is newly added, the new rule that includes the added server in the distribution destination is newly employed and added to the rule information 61.

In the example illustrated in Fig. 3, the new rule is defined as setting the allocation ratio of the object for the server[1] 20A to 20%, setting the allocation ratio of the object for the server[2] 20B to 10%, setting the allocation ratio of the object for the server[3] 20C to 10%, setting the allocation ratio of the object 30 for the server[4] 20D to 30%, and setting the allocation ratio of the object for the server[5] 20E to 30% (allocation ratio of 2:1:1:3:3).

For example, at the time of creating the bucket, the information processing apparatus 10 generates the distribution rule corresponding to the number of servers comprised in the storage system 100 and the processing performance and the like of each server at the point in time and stores the distribution rule in the storage unit 13 as the rule information 61. In addition, for example, at a time of adding a server, the information processing apparatus 10 generates a new distribution rule that includes the added server in the distribution destination of the object, and adds the new distribution rule to the rule information 61.

In a case of generating the new and old distribution rules, for example, the information processing apparatus 10 may generate the distribution rules such that the loads in which the processing performance of the servers installed at the point in time is considered are uniformed. In addition, in a case of generating the new and old distribution rules, the information processing apparatus 10 includes history information indicating which distribution rule is the most recent in the rule information 61.

In the information processing apparatus 10 according to the present embodiment, the distribution rule is updated with the addition of the server functioning as the storage node. Typically, a distribution destination corresponding to a relatively old distribution rule does not include the added server. A distribution destination corresponding to a relatively new distribution rule includes the added server.

While a case where two distribution rules of the old rule and the new rule are included in the rule information 61 is illustrated in the example illustrated in Fig. 3, the disclosed technology is not limited to this aspect. For example, in a case where the distribution rule is updated twice or more, three or more distribution rules are included in the rule information 61. The distribution rule can also be arbitrarily set and changed by a manager of the information processing apparatus 10.

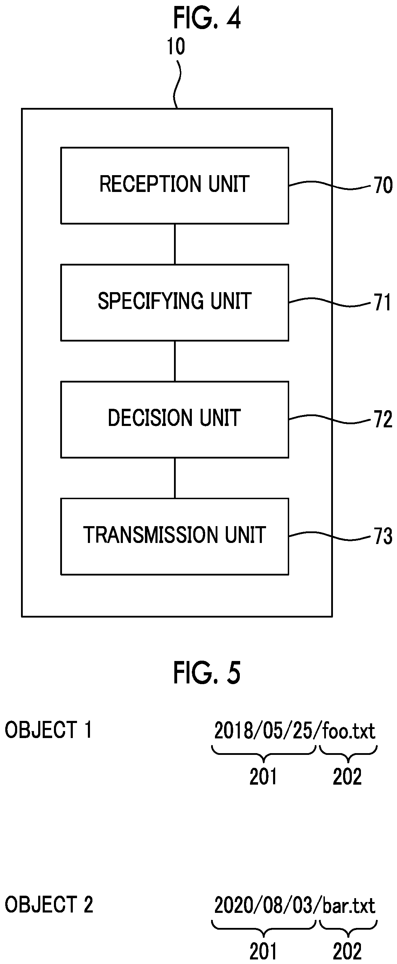

Fig. 4 is a functional block diagram illustrating an example of a functional configuration of the information processing apparatus 10 in a case of distributing objects to each of the servers constituting the storage nodes. As illustrated in Fig. 4, the information processing apparatus 10 includes a reception unit 70, a specifying unit 71, a decision unit 72, and a transmission unit 73. The information processing apparatus 10 functions as the reception unit 70, the specifying unit 71, the decision unit 72, and the transmission unit 73 by executing the information processing program 60 by the CPU 11.

As described above, in a case where the user arranges the object to be stored in the bucket and provides the upload instruction, the object to be stored is transmitted to the storage system 100. The reception unit 70 receives the object to be stored transmitted from the terminal apparatus 50.

The specifying unit 71 specifies a distribution rule to be applied to the object to be stored received by the reception unit 70 among a plurality of distribution rules included in the rule information 61 stored in the storage unit 13. The specifying unit 71 specifies the distribution rule to be applied based on the identification information assigned to the object to be stored.

Fig. 5 is a diagram illustrating an example of the identification information assigned to the object. In Fig. 5, an object 1 to which identification information of 2018/05/25/foo.txt is assigned and an object 2 to which identification information of 2020/08/03/bar.txt is assigned are illustrated. A first part 201 that is the part of 2018/05/25/ included in the identification information of the object 1 and that is the part of 2020/08/03/ included in the identification information of the object 2 is a part corresponding to a prefix in the object key. A second part 202 that is the part of foo.txt included in the identification information of the object 1 and that is the part of bar.txt included in the identification information of the object 2 is a part corresponding to an object name in the object key. Other parts of the identification information may be included at least one of between the first part 201 and the second part 202 or before the first part 201.

The specifying unit 71 specifies the distribution rule to be applied based on the first part 201 included in the identification information of the object to be stored. As illustrated in Fig. 5, the first part 201 may include a numerical value. This numerical value may be a numerical value that is increased with an elapse of time, such as a year, a month, and a day of creation of the object. In the example illustrated in Fig. 5, the object 1 is an object created on May 25, 2018, and the object 2 is an object created on August 3, 2020.

In a case where the first part 201 includes a numerical value, the plurality of distribution rules included in the rule information 61 are associated with a range determined in advance for this numerical value. For example, the old rule illustrated in Fig. 3 is associated with, for example, a numerical value range "2018/01/01 to 2019/12/31". This means that the old rule is applied to an object created between January 1, 2018 and December 31, 2019. On the other hand, the new rule illustrated in Fig. 3 is associated with, for example, a numerical value range "2020/01/01 to". This means that the new rule is applied to an object created on January 1, 2020 and later. In this example, the first part 201 of the object 1 illustrated in Fig. 5 includes a numerical value "2018/05/25", and this is included in the numerical value range "2018/01/01 to 2019/12/31". Thus, the old rule is applied to the object 1. The first part 201 of the object 2 illustrated in Fig. 5 includes a numerical value "2020/08/03", and this is included in the numerical value range "2020/01/01 to". Thus, the new rule is applied to the object 2. A correspondence relationship between a range of the numerical value included in the first part 201 and the distribution rule to be applied may be included in the rule information 61 or may be stored in the storage unit 13 separately from the rule information 61.

The decision unit 72 decides a server as the distribution destination corresponding to the distribution rule specified by the specifying unit 71 in the following procedure based on the second part 202 included in the identification information of the object to be stored.

The decision unit 72 calculates a hash value a of the second part 202 included in the identification information of the object to be stored. The decision unit 72 calculates a remainder c in dividing the hash value a by a divisor b determined in accordance with the distribution rule to be applied. The decision unit 72 decides a server associated with a value of the remainder c as the distribution destination of the object to be stored.

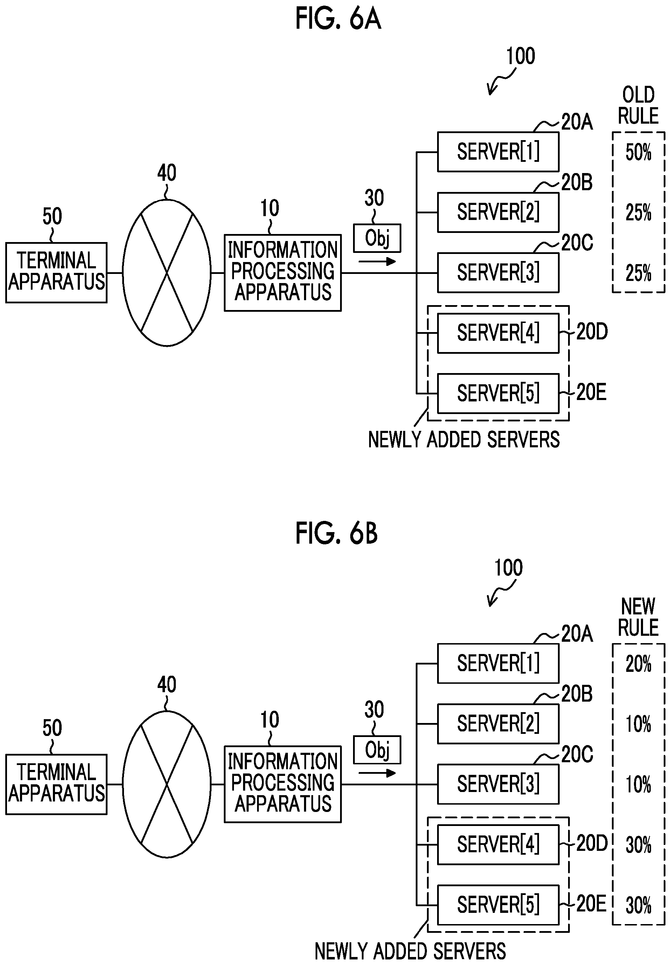

For example, in a case where the distribution rule specified by the specifying unit 71 is the old rule (allocation ratio of 2:1:1) illustrated in Fig. 3, the decision unit 72 derives 4 (= 2 + 1 + 1) as the divisor b determined in accordance with the distribution rule to be applied. The decision unit 72 decides the distribution destination of the object to be stored as the server[1] 20A in a case where the remainder c in dividing the hash value a of the second part included in the identification information of the object to be stored by the divisor b (= 4) is 0 or 1, decides the distribution destination of the object to be stored as the server[2] 20B in a case where the remainder c is 2, and decides the distribution destination of the object to be stored as the server[3] 20C in a case where the remainder c is 3. Accordingly, as illustrated in Fig. 6A, the distribution of the object to be stored to the server[1] 20A to the server[3] 20C can be performed using the allocation ratio (2:1:1) corresponding to the old rule.

On the other hand, in a case where the distribution rule specified by the specifying unit 71 is the new rule (allocation ratio of 2:1:1:3:3) illustrated in Fig. 3, the decision unit 72 derives 10 (= 2 + 1 + 1 + 3 + 3) as the divisor b determined in accordance with the distribution rule to be applied. The decision unit 72 decides the distribution destination of the object to be stored as the server[1] 20A in a case where the remainder c in dividing the hash value a of the object to be stored by the divisor b (= 10) is 0 or 1, decides the distribution destination of the object to be stored as the server[2] 20B in a case where the remainder c is 2, decides the distribution destination of the object to be stored as the server[3] 20C in a case where the remainder c is 3, decides the distribution destination of the object to be stored as the server[4] 20D in a case where the remainder c is 4, 5, or 6, and decides the distribution destination of the object to be stored as the server[5] 20E in a case where the remainder c is 7, 8, or 9. Accordingly, as illustrated in Fig. 6B, the distribution of the object to be stored to each server can be performed using the allocation ratio (2:1:1:3:3) corresponding to the new rule illustrated in Fig. 3.

As described above, by deciding the distribution destination in accordance with the remainder c in dividing the hash value a of the second part 202 included in the identification information of the object to be stored by the divisor b determined in accordance with the distribution rule to be applied, the distribution of the object to be stored to the server can be performed using the allocation ratio corresponding to the distribution rule to be applied. A correspondence relationship between the remainder c and the server as the distribution destination for each distribution rule may be included in the rule information 61 or may be stored in the storage unit 13 separately from the rule information 61.

The transmission unit 73 transmits the object to be stored to the server as the distribution destination decided by the decision unit 72 among the server[1] 20A to the server[5] 20E. The object to be stored is stored in a storage medium such as a hard disk comprised in the server as the distribution destination.

Here, a case of updating an existing object already stored in any of the server[1] 20A to the server[5] 20E is considered. In this case, an update object that is an update of the existing object is stored in the storage system 100 as a separate object from the existing object. That is, the update of the object in the storage system 100 is performed by "adding the update object" instead of so-called "data overwriting". In such a system, in a case where the update object is stored in a server different from a server in which the corresponding existing object is stored, it is difficult to specify the most recent object.

In a case of updating the existing object, the user arranges the update object to which the same identification information as the existing object is assigned in the bucket. Accordingly, the information processing apparatus 10 can distribute the update object in accordance with the same distribution rule as a distribution rule applied to the existing object.

In addition, as described above, the information processing apparatus 10 decides the distribution destination in accordance with the remainder c in dividing the hash value a of the second part 202 included in the identification information of the object by the divisor b determined in accordance with the selected distribution rule. Since the same identification information as the existing object is assigned to the update object, the remainder c calculated for the update object is the same as the remainder c calculated for the existing object. Accordingly, the information processing apparatus 10 can distribute the update object to the same server as the server in which the existing object is stored.

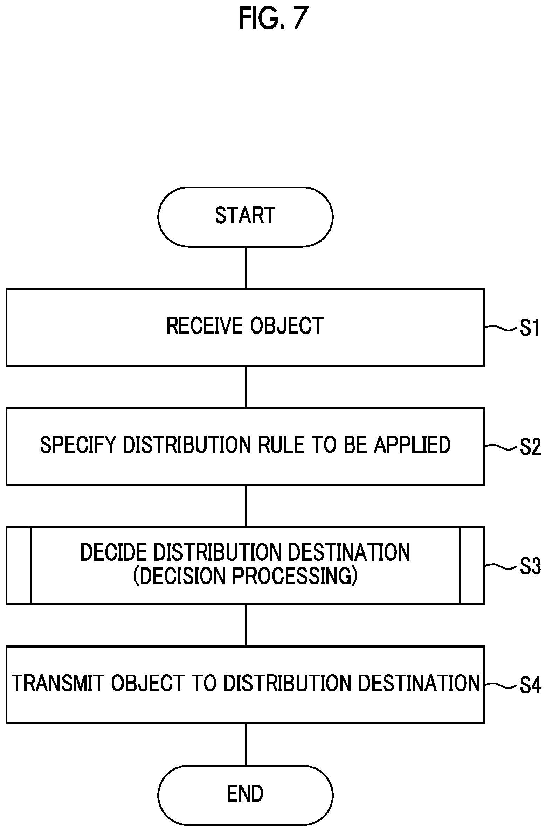

Hereinafter, an action of the information processing apparatus 10 will be described. Fig. 7 is a flowchart illustrating an example of a flow of processing performed by executing the information processing program 60 by the CPU 11. For example, the information processing program 60 is executed in a case where the storage request of the object is made from the terminal apparatus 50. An assumption that the storage unit 13 stores the rule information 61 in advance is made.

In step S1, the reception unit 70 receives the object to be stored transmitted from the terminal apparatus 50.

In step S2, the specifying unit 71 specifies the distribution rule to be applied to the object received in step S 1 based on the first part 201 included in the identification information assigned to the object. For example, in a case where the first part 201 includes a numerical value, the plurality of distribution rules included in the rule information 61 are associated with a range determined in advance for this numerical value. In this case, the specifying unit 71 determines in which range the numerical value included in the first part 201 in the object to be stored is included in the range determined in advance for the numerical value, and specifies the distribution rule corresponding to the determined range as the distribution rule to be applied to the object received in step S1.

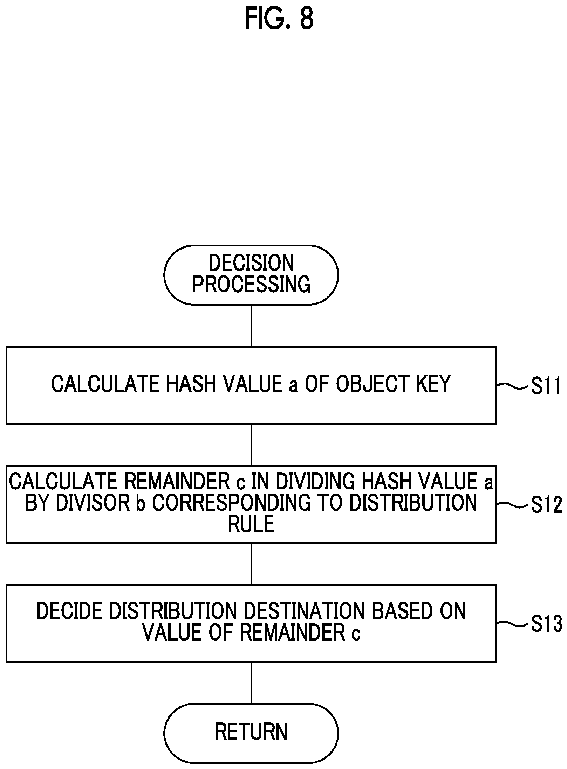

In step S3, the decision unit 72 performs decision processing of deciding the distribution destination corresponding to the distribution rule specified in step S2 from the server[1] 20A to the server[5] 20E. Here, Fig. 8 is a flowchart illustrating details of the decision processing. Hereinafter, the decision processing will be described with reference to the flowchart in Fig. 8.

In step S11, the decision unit 72 calculates the hash value a of the second part 202 included in the identification information of the object received in step S1.

In step S12, the decision unit 72 calculates the remainder c in dividing the hash value a by the divisor b determined in accordance with the distribution rule specified in step S2.

In step S13, the decision unit 72 decides the distribution destination of the object received in step S1 based on the value of the remainder c calculated in step S12.

With reference to Fig. 7, in step S4, the transmission unit 73 transmits the object received in step S1 to the server as the distribution destination decided in step S3. The object is stored in the storage medium such as the hard disk comprised in the server as the distribution destination.

As described so far, according to the information processing apparatus 10 according to the present embodiment, in a case where a server functioning as a storage node is added, a new distribution rule including the added server as the distribution destination of the object is generated. Thus, the added server can be efficiently used. In the system in which the distribution rule can be changed, it is considered that the update object that is the update of the existing object distributed in accordance with the past distribution rule is distributed in accordance with the most recent distribution rule. In this case, the update object may be stored in a server different from the server in which the existing object is stored. In a case where the existing object and the update object are stored in different servers, it may be difficult to specify the most recent object. As a method for solving this problem, a method of issuing an inquiry as to whether or not an object to which the same identification information as the object to be stored is assigned is stored to each server is considered. However, according to this method, in a case where there are multiple objects to be stored, the inquiry is necessary for each object. Thus, a processing time is relatively long.

According to the information processing apparatus 10 according to the present embodiment, the distribution rule to be applied is specified based on the first part 201 included in the identification information of the object to be stored, and the object to be stored is distributed to any of the plurality of servers in accordance with the specified distribution rule. As described above, since the same identification information as the existing object is assigned to the update object, the information processing apparatus 10 can distribute the update object in accordance with the same distribution rule as the distribution rule applied to the existing object. In addition, since the server as the distribution destination of the object is decided based on the part of the second part 202 included in the identification information of the object, the information processing apparatus 10 can distribute the update object to the same server as the server in which the existing object is stored. That is, according to the information processing apparatus 10 according to the present embodiment, even in a case where a plurality of distribution rules are present, specification of the most recent object can be facilitated. In addition, the object to be stored can be distributed in a short processing time, compared to a case of issuing the inquiry to each server.

In addition, the first part 201 in the identification information of the object includes a numerical value that is increased with an elapse of time, such as the year, the month, and the day of the creation of the object, and the plurality of distribution rules are associated with a range determined in advance for the numerical value. Accordingly, use of the new and old distribution rules can be simply and appropriately differentiated.

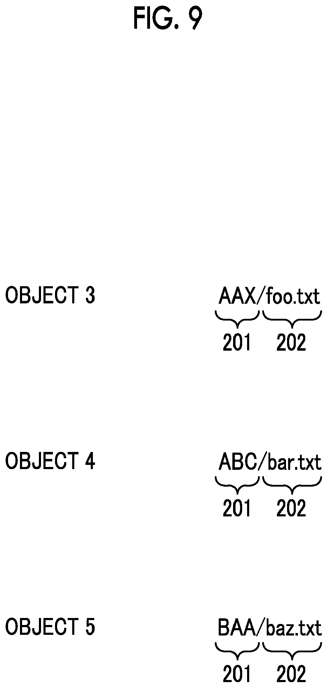

Fig. 9 is a diagram illustrating another example of the identification information assigned to the object. In Fig. 9, an object 3 to which identification information of AAX/foo.txt is assigned, an object 4 to which identification information of ABC/bar.txt is assigned, and an object 5 to which identification information of BAA/baz.txt is assigned are illustrated. The first part 201 that is the part of AAX/ included in the identification information of the object 3, the part of ABC/ included in the identification information of the object 4, and the part of BAA/ included in the identification information of the object 5 is a part corresponding to the prefix in the object key. The second part 202 that is the part of foo.txt included in the identification information of the object 3, the part of bar.txt included in the identification information of the object 4, and the part of baz.txt included in the identification information of the object 5 is a part corresponding to the object name in the object key.

The first part 201 of the identification information of the object may include a character string. The character string may include a numerical value. In a case where the first part 201 includes a character string, the plurality of distribution rules included in the rule information 61 are associated with a range determined for this character string. Specifically, the plurality of distribution rules are associated with a range of an order corresponding to an order rule determined in advance for the character string, such as a dictionary order or an ascending order or a descending order in Unicode value.

For example, the old rule illustrated in Fig. 3 is associated with a character string starting with "A", and the new rule illustrated in Fig. 3 is associated with a character string starting with a character "B" or later in the dictionary order. In this case, the first part 201 of the objects 3 and 4 illustrated in Fig. 9 includes a character string starting with "A". Thus, the old rule is applied to the objects 3 and 4. The first part 201 of the object 5 illustrated in Fig. 9 includes a character string starting with "B". Thus, the new rule is applied to the object 5. A correspondence relationship between a range of the character string included in the first part 201 and the distribution rule to be applied may be included in the rule information 61 or may be stored in the storage unit 13 separately from the rule information 61.

Even in a case where the first part 201 included in the identification information of the object includes a character string other than a numerical value, the information processing apparatus 10 can distribute the update object in accordance with the same distribution rule as the distribution rule applied to the existing object, and can distribute the update object to the same server as the server in which the existing object is stored.

While a case where the decision unit 72 decides the server as the distribution destination based on the second part 202 included in the identification information of the object is illustrated in the above description, the disclosed technology is not limited to this aspect. The decision unit 72 may decide the server as the distribution destination based on the entire part of the identification information including both of the first part 201 and the second part 202. In this case, the decision unit 72 may calculate the hash value a for the entire part of the identification information including the first part 201 and the second part 202, calculate the remainder c in dividing the hash value a by the divisor b determined in accordance with the distribution rule to be applied, and decide a server corresponding to the remainder c as the server as the distribution destination.

In addition, while a case of changing the distribution rule with the addition of the server functioning as the storage node is illustrated in the present embodiment, the disclosed technology is not limited to this aspect. The distribution rule can be changed at an arbitrary timing. In addition, the server as the distribution destination corresponding to the past distribution rule and the server as the distribution destination corresponding to the most recent distribution rule may partially match, completely match, or completely not match.

In each of the embodiments, for example, the following various processors can be used as a hardware structure of a processing unit executing various types of processing of the reception unit 70, the specifying unit 71, the decision unit 72, and the transmission unit 73. The various processors include, in addition to a CPU that is a general-purpose processor functioning as various processing units by executing software (program) as described above, a programmable logic device (PLD) that is a processor such as an FPGA having a circuit configuration changeable after manufacturing, a dedicated electric circuit that is a processor such as an application specific integrated circuit (ASIC) having a circuit configuration dedicatedly designed to execute specific processing, and the like.

One processing unit may be composed of one of the various processors or may be composed of a combination of two or more processors of the same type or different types (for example, a combination of a plurality of FPGAs or a combination of a CPU and an FPGA). In addition, a plurality of processing units may be composed of one processor.

As an example in which the plurality of processing units are composed of one processor, first, as represented by a computer such as a client and a server, a form in which one processor is composed of a combination of one or more CPUs and software and the processor functions as the plurality of processing units is possible. Second, as represented by a system on chip (SoC) and the like, a form of using a processor that implements functions of the entire system including the plurality of processing units in one integrated circuit (IC) chip is possible. Accordingly, the various processing units are configured using one or more of the various processors as a hardware structure.

Furthermore, more specifically, an electric circuit (circuitry) in which circuit elements such as semiconductor elements are combined can be used as the hardware structure of the various processors.

In addition, while an aspect in which the information processing program 60 is stored (installed) in advance in the storage unit 13 has been described in the embodiments, the disclosed technology is not limited thereto. The information processing program 60 may be provided in the form of a recording on a recording medium such as a compact disc read only memory (CD-ROM), a digital versatile disc read only memory (DVD-ROM), and a universal serial bus (USB) memory. In addition, the information processing program 60 may be in the form of a download from an external device through a network.

The disclosure of JP2020-140421 filed on August 21, 2020 is incorporated in the present specification by reference in its entirety. In addition, all documents, patent applications, and technical standards disclosed in the present specification are incorporated in the present specification by reference to the same extent as in a case where each of the documents, patent applications, technical standards are specifically and individually indicated to be incorporated by reference.

## Claims

1. An information processing apparatus that distributes an object to be stored to any of a plurality of storage nodes in accordance with a distribution rule set in advance, the apparatus comprising:
at least one processor,
wherein the processor is configured to:
receive the object to be stored;
specify a distribution rule to be applied based on a first part that is included in identification information of the received object and that is associated with the distribution rule; and
distribute the received object to any of the plurality of storage nodes in accordance with the specified distribution rule.

2. The information processing apparatus according to claim 1,
wherein the first part includes a numerical value,
a plurality of the distribution rules are associated with a range determined in advance for the numerical value, and
the processor is configured to specify the distribution rule to be applied from the plurality of distribution rules based on the numerical value.

3. The information processing apparatus according to claim 2,
wherein the numerical value is a numerical value that is increased with an elapse of time.

4. The information processing apparatus according to claim 3,
wherein the numerical value includes a numerical value corresponding to a year, a month, and a day of creation of the object to be stored.

5. The information processing apparatus according to claim 1,
wherein the first part includes a character string,
a plurality of the distribution rules are associated with a range of an order corresponding to an order rule determined in advance for the character string, and
the processor is configured to specify the distribution rule to be applied from the plurality of distribution rules based on the character string.

6. The information processing apparatus according to any one of claims 1 to 5,
wherein the distribution rule is updated with addition of the storage node,
a distribution destination corresponding to a relatively old distribution rule does not include the added storage node, and
a distribution destination corresponding to a relatively new distribution rule includes the added storage node.

7. The information processing apparatus according to any one of claims 1 to 6,
wherein the processor is configured to decide a storage node as a distribution destination of the object to be stored based on the identification information.

8. The information processing apparatus according to claim 7,
wherein the identification information further includes a second part, and
the processor is configured to decide the storage node as the distribution destination of the object to be stored based on the second part.

9. The information processing apparatus according to claim 8,
wherein the processor is configured to decide the storage node as the distribution destination of the object to be stored based on a value of a remainder in dividing a hash value of the second part by a divisor corresponding to the distribution rule to be applied.

10. An information processing method for distributing an object to be stored to any of a plurality of storage nodes in accordance with a distribution rule set in advance, the method comprising:
causing at least one processor provided in an information processing apparatus to execute:
receiving the object to be stored;
specifying a distribution rule to be applied based on a first part that is included in identification information of the received object and that is associated with the distribution rule; and
distributing the received object to any of the plurality of storage nodes in accordance with the specified distribution rule.

11. An information processing program causing at least one processor provided in an information processing apparatus to execute processing of distributing an object to be stored to any of a plurality of storage nodes in accordance with a distribution rule set in advance, the program causing the processor to execute a process comprising:
receiving the object to be stored;
specifying a distribution rule to be applied based on a first part that is included in identification information of the received object and that is associated with the distribution rule; and
distributing the received object to any of the plurality of storage nodes in accordance with the specified distribution rule.
